# EUROPEAN PATENT SPECIFICATION

(11) **EP 4 116 148 B1**
(45) Date of publication and mention of the grant of the patent: **09.07.2025**
(21) Application number: 22165322.3
(22) Date of filing: 30.03.2022
(51) Int. Cl.: B60R 1/12, B60R 1/06

(54) **REAR-VIEW MIRROR ASSEMBLY OF VEHICLE, AND VEHICLE**
RÜCKSPIEGELANORDNUNG FÜR EIN FAHRZEUG UND FAHRZEUG
ENSEMBLE RÉTROVISEUR ARRIÈRE DE VÉHICULE ET VÉHICULE

(30) Priority: 09.07.2021 CN 202121560590 U
(43) Date of publication of application: 11.01.2023
(73) Proprietor: Nio Technology (Anhui) Co., Ltd, Hefei City, Anhui 230601 (CN)
(72) Inventor: SHI, Jiepei, AnTing Town, Jiading Shanghai (CN)
(74) Representative: Patentwerk B.V.

(56) References cited:
- CN-A- 112 208 440
- CN-U- 210 591 624
- CN-Y- 201 432 615
- FR-A1- 2 943 123

## Description

### Technical Field

The disclosure relates to the technical field of vehicles, and in particular to a rear-view mirror assembly of a vehicle, and a vehicle.

### Background Art

Autonomous vehicles can sense the surrounding environment by 360 degrees through a plurality of sensors and conduct autonomous navigation so as to take passengers to their destinations. For example, Chinese patent publication CN112208440A discloses a commercial vehicle mirror structure integrated with a camera and different radars. As an essential and important sensing component in an autonomous vehicle driving system, a laser radar is generally arranged in the front side of a vehicle. Global position of the vehicle in a high-precision map and various parameters during driving of the vehicle can be obtained by the laser radar. Since the laser radar is an electronic device and may generate heat after long-term use, service life of the laser radar may be shortened during use due to constant high temperature, and even detection fault or complete failure may be caused, resulting in the laser radar failing to work properly.

Therefore, a novel rear-view mirror assembly of a vehicle and a corresponding vehicle are needed in the field to solve the above problem.

### Summary of the Disclosure

In order to solve the above problem in the prior art, that is, in order to solve the problem that existing laser radars, used for sensing surrounding environments, in vehicles have poor heat dissipation, the disclosure provides a rear-view mirror assembly of a vehicle. The vehicle includes an onboard air-conditioner. The rear-view mirror assembly includes a rear-view mirror, a laser radar, and an air supply pipe. The rear-view mirror is provided with a chamber. The laser radar is disposed in the chamber, and a detection part of the laser radar is exposed to the outside of the rear-view mirror. An inlet of the air supply pipe is in communication with an air outlet of the onboard air-conditioner. The air supply pipe extends into the chamber, and an outlet of the air supply pipe is arranged towards the laser radar.

With this arrangement, cooling air generated by the onboard air-conditioner can be used to purposefully cool and dissipate heat of the laser radar, thereby avoiding the situation that detection precision is affected or detection faults occur due to excessive temperature during use of the laser radar, prolonging service life of the laser radar, and ensuring normal operation of the laser radar; moreover, since the air supply pipe is accommodated in the chamber of the rear-view mirror, space is saved, the rear-view mirror has a higher integration level and a smaller size, and the overall spatial arrangement is facilitated.

In a technical solution according to the invention of the above mentioned rear-view mirror assembly, the rear-view mirror assembly further includes a snap-fit assembly arranged in the chamber, and the air supply pipe is connected inside the chamber through the snap-fit assembly. With this arrangement, the air supply pipe is connected inside the rear-view mirror in a snap-fit manner, which facilitates quick mounting and demounting of the air supply pipe.

In a technical solution according to the invention of the abovementioned rear-view mirror assembly, the snap-fit assembly includes a plurality of snap-fit members, the plurality of snap-fit members being arranged at intervals from one another and clamping the air supply pipe in the chamber, a plurality of snap-fit structures serving as a common snap-fit structure. Through this arrangement, long-distance fastening of the air supply pipe can be achieved by means of the plurality of snap-fit members, the air supply pipe is prevented from partially moving in the chamber, and stability of fastening the air supply pipe is improved.

In a preferred technical solution of the abovementioned rear-view mirror assembly, each of the snap-fit members includes a connecting portion, a first gripping portion, and a second gripping portion, the connecting portion is connected to an inner wall of the rear-view mirror, the first gripping portion and the second gripping portion are both connected to the connecting portion, and the air supply pipe is clamped between the first gripping portion and the second gripping portion. With this arrangement, each snap-fit member clamps the air supply pipe from two sides of an outer pipe wall of the air supply pipe, which is conductive to improvement of stability of clamping the air supply pipe, so that the air supply pipe can be fastened in the chamber more firmly.

In a preferred technical solution of the abovementioned rear-view mirror assembly, both the first gripping portion and the second gripping portion are elastic gripping portions, one end of the first gripping portion and one end of the second gripping portion are both connected to the connecting portion, there is a gap between the other end of the first gripping portion and the other end of the second gripping portion, and a width of the gap is less than a diameter of the air supply pipe. With this arrangement, the first gripping portion and the second gripping portion can be separated from each other by the air supply pipe so that the air supply can enter a position between the first gripping portion and the second gripping portion during installation; after the installation is completed, the first gripping portion and the second gripping portion that are in a natural state can clamp and lock the air supply pipe between them, and prevent the air supply pipe releasing from the snap-fit member; during demounting, the air supply pipe separates the first gripping portion and the second gripping portion from each other under the action of an external force so as to be moved out of the position between the first gripping portion and the second gripping portion, thus realizing quick demounting of the air supply pipe and the snap-fit member. The first gripping portion and the second gripping portion are of elastic structures so that the outer pipe wall of the air supply can be prevented from being damaged during demounting.

In a preferred technical solution of the abovementioned rear-view mirror assembly, the chamber includes an accommodating chamber and a communicating chamber, the laser radar is arranged in the accommodating chamber, the accommodating chamber is in communication with the interior of a body of the vehicle through the communicating chamber, a part of the snap-fit members are arranged in the accommodating chamber, and the other part of the snap-fit members are arranged in the communicating chamber. With this arrangement, the air supply pipe can be firmly mounted in the chamber, and accordingly is effectively prevented from loosening in the chamber.

In a preferred technical solution of the abovementioned rear-view mirror assembly, the rear-view mirror assembly further includes a connecting member, and the laser radar is connected to an inner wall of the rear-view mirror through the connecting member. With this arrangement, the laser radar can be stably mounted in the accommodating chamber.

In a preferred technical solution of the abovementioned rear-view mirror assembly, the connecting member includes a first screwing element and a second screwing element, the laser radar is connected to the inner wall of the rear-view mirror through the first screwing element and the second screwing element, and the first screwing element and the second screwing element are respectively located on two sides of the laser radar. By using a fastening manner of screwing on both sides, connection reliability of the laser radar can be improved to the utmost extent while the mounting and demounting of the laser radar is facilitated.

In a preferred technical solution of the abovementioned rear-view mirror assembly, the number of the laser radar is more than one, and/or the air supply pipe is a flexible pipe. With this arrangement, the laser radar can be more flexibly applied to occasions having different requirements, and a space in the rear-view mirror has higher availability and coordination; moreover, the air supply pipe can be adapted to more applicable scenarios, for example, the air supply pipe can be applied to not only a non-foldable rear-view mirror but also a foldable rear-view.

In another aspect, the disclosure further provides a vehicle. The vehicle includes the rear-view mirror assembly described above, and accordingly has the abovementioned technical effects.

### Brief Description of the Drawings

Fig. 1 is a schematic diagram of an external structure of a rear-view mirror of a vehicle of the disclosure;
Fig. 2 is a schematic diagram of an internal structure of a rear-view mirror of a vehicle of the disclosure; and
Fig. 3 is a structural diagram of a snap-fit member in a rear-view mirror of a vehicle of the disclosure.

### List of reference numerals:

1. rear-view mirror; 2. laser radar; 3. air supply pipe; 4. snap-fit member; 41. connecting portion; 42. first gripping portion; 43. second gripping portion; 51. accommodating chamber; 52. communicating chamber; 61. first screwing element; and 62. second screwing element.

### Detailed Description of Embodiments

The preferred embodiments of the disclosure are described below with reference to the accompanying drawings. It should be understood by those skilled in the art that these embodiments are only for explaining the technical principles of the disclosure and are not intended to limit the scope of protection of the disclosure.

It should be noted that, in the description of the disclosure, the terms that indicate the direction or positional relationship, such as "middle", "upper", "left", "right", "inner", and "outer", are based on the direction or positional relationship shown in the figures, which is merely for ease of description instead of indicating or implying that the device or element must have a particular orientation and be constructed and operated in a particular orientation, and therefore, should not be construed as limiting the disclosure. Furthermore, the terms "first" and "second" are used for descriptive purposes only, and cannot be understood as indicating or implying relative importance.

In addition, it should also be noted that, in the description of the disclosure, the terms "arrange", "mount", and "connect" should be interpreted in a broad sense unless explicitly defined and limited otherwise. For example, a connection may be a fixed connection, a detachable connection, or an integral connection; or may mean a direct connection, an indirect connection by means of an intermediary, or internal communication between two elements. For those skilled in the art, the specific meaning of the above-mentioned terms in the disclosure can be interpreted according to the specific situation.

Based on the problem mentioned in the Background Art that laser radars used for sensing surrounding environments for vehicles have poor heat dissipation, the disclosure provides a rear-view mirror assembly of a vehicle, and a vehicle, and is intended to realize purposeful cooling and heat dissipation of a laser radar using cooling air of an onboard air-conditioner, thereby avoiding the situation that detection precision of the laser radar is affected or detection faults occur due to excessive temperature of the laser radar during use of the laser radar, prolonging service life of the laser radar, and ensuring normal operation of the laser radar.

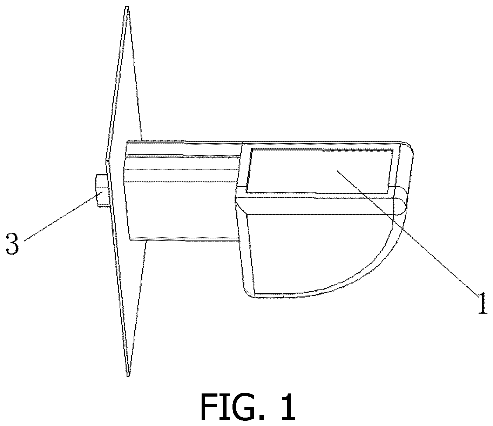

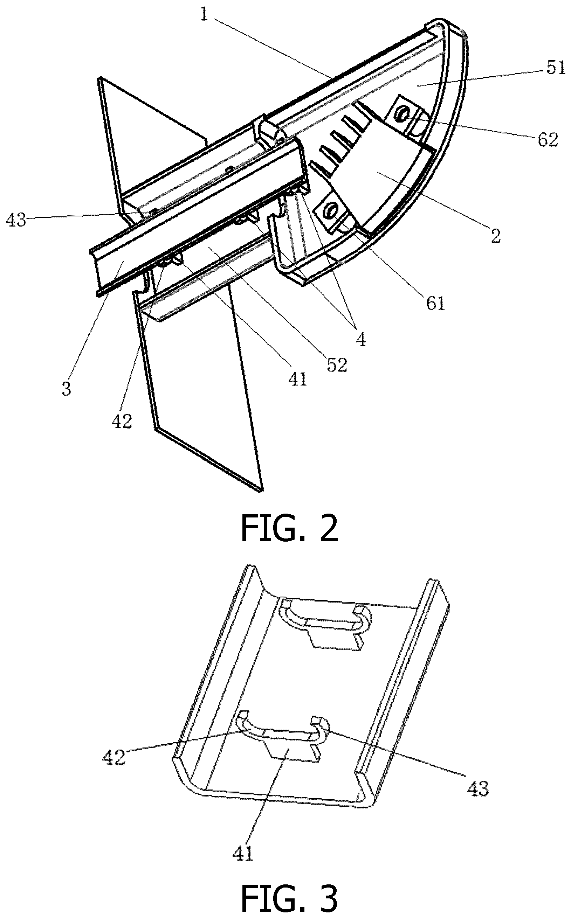

Specifically, the vehicle of the disclosure includes a vehicle body and rear-view mirror assemblies. There are two rear-view mirror assemblies. The two rear-view mirror assemblies are respectively located on the left front and the right front of a vehicle body, can be fastened to a door of the vehicle body, and can also be fastened onto other components of the vehicle body. As shown in Fig. 1 and Fig. 2, the rear-view mirror assembly includes a rear-view mirror 1, a laser radar 2, and an air supply pipe 3. The rear-view mirror 1 is provided with a chamber. The laser radar 2 is disposed in the chamber, and a detection part of the laser radar 2 is exposed to the outside of the rear-view mirror 1. An inlet of the air supply pipe 3 is in communication with an air outlet of the onboard air-conditioner. The air supply pipe 3 extends into the chamber, and an outlet of the air supply pipe 3 is arranged towards the laser radar 2. Those skilled in the art can flexibly set a fastening manner of the air supply pipe 3 in the chamber in practical applications. The air supply pipe 3 may be connected to an inner wall of the rear-view mirror 1 by welding, or the air supply pipe 3 and the rear-view mirror 1 may be integrally cast. The air supply pipe 3 can also be connected to the inner wall of the rear-view mirror 1 in a detachable manner, for example, the air supply pipe 3 is snap-fitted, magnetically attached, screwed or bonded to the inner wall of the rear-view mirror 1. In addition, the air supply pipe 3 can also be connected to the inner wall of the rear-view mirror 1 through a combination of the above various detachable connection manners.

In a preferred circumstance, the rear-view mirror assembly further includes a snap-fit assembly disposed in the chamber, and the air supply pipe 3 is connected inside the chamber through the snap-fit assembly. The snap-fit assembly may be a single or a plurality of snap-fit members 4 for mounting the air supply pipe 3 (as the circumference of a plurality of snap-fit members in Fig. 2). When the plurality of snap-fit members 4 are used to mount the air supply pipe 3, the plurality of snap-fit members 4 can be arranged at intervals from one another, or can be arranged consecutively, wherein the snap-fit members 4 may be made of a plastic material such as PA66 such that the snap-fit members 4 can be mounted and demounted repeatedly without being damaged. The snap-fit members 4 may also be made of other materials in actual applications. Referring to Fig. 2, in a preferred solution, a plurality of snap-fit members 4 are arranged on the inner wall of the rear-view mirror 1, and the plurality of snap-fit members 4 are spaced apart from one another and clamp the air supply pipe 3 in the chamber.

In the above preferred solution, each snap-fit member 4 of the plurality of snap-fit members 4 may have the same structure, or may have the different structure. The snap-fit member 4 may have a snap-fit structure, or a claw structure, or other clamping structure, as long as it can fasten the air supply pipe 3 to the inner wall of the rear-view mirror 1. In a preferred situation, with continued reference to Fig. 2 and Fig. 3 (it should be noted that, in order to clearly illustrate the preferred solution of the snap-fit member of the disclosure, some product structures including the air supply pipe 3 and the like are omitted in Fig. 3, to facilitate illustration of the specific structure of the snap-fit member 4), specifically, each snap-fit member 4 includes a connecting portion 41, a first gripping portion 42 and a second gripping portion 43, the connecting portion 41 is connected to the inner wall of the rear-view mirror 1, the first gripping portion 42 and the second gripping portion 43 are both connected to the connecting portion 41, and the air supply pipe 3 is clamped between the first gripping portion 42 and the second gripping portion 43. With this arrangement, the first gripping portion 42 and the second gripping portion 43 engage and clamp the air supply pipe 3 on both sides respectively, so as to prevent the air supply pipe 3 from moving due to unstable mounting. As shown in Fig. 3, it is more preferred that one end of the first gripping portion 42 and one end of the second gripping portion 43 are both connected to the connecting portion 41, there is a gap between the other end of the first gripping portion 42 and the other end of the second gripping portion 43, and a width of the gap is less than a diameter of the air supply pipe 3; moreover, the first gripping portion 42 and the second gripping portion 43 are both elastic gripping portions which may provide a pre-tightening force that can fasten and connect the air supply pipe 3, moreover, the arrangement of the elastic gripping portions can be freely deformed and facilitates demounting and maintenance of the air supply pipe 3. As an alternative, the first gripping portion 42 and the second gripping portion 43 may also be inelastic gripping portions, or one is an elastic gripping portion and the other is an inelastic gripping portion. The adjustment of a specific type of the gripping portion does not constitute a limitation to the disclosure, and should be limited within the scope of protection of the disclosure.

Optionally, the chamber may be divided into an accommodating chamber and a communicating chamber, which are respectively used for accommodating different components. For example, the air supply pipe 3 is mounted in the communicating chamber 52, and the laser radar 2 is mounted in the accommodating chamber 51. However, the arrangement of the above-mentioned chambers is merely an example, not a limitation. There may be only one chamber or the chamber may be divided into three or more chambers, and the specific arrangement positions of the air supply pipe 3 and the laser radar 2 can be flexibly arranged according to the number of the chambers. Those skilled in the art can flexibly set a fastening manner of the laser radar 2 in the chamber in practical applications. The laser radar 2 may be connected to the inner wall of the rear-view mirror 1 by welding, or the laser radar and the rear-view mirror 1 may be integrally cast. Moreover, the laser radar 2 can also be connected to the inner wall of the rear-view mirror 1 in a detachable manner, for example, the laser radar 2 is screwed, magnetically attached, snap-fitted or bonded to the inner wall of the rear-view mirror 1.

Referring to Fig. 2, in a preferred solution, an accommodating chamber 51 and a communicating chamber 52 are respectively formed in an inner cavity of the rear-view mirror assembly. The laser radar 2 is arranged in the accommodating chamber 51, the air supply pipe 3 is arranged in the communicating chamber 52, the accommodating chamber 51 is in communication with the interior of a body of the vehicle through the accommodating chamber 52, a part of the snap-fit members 4 is arranged in the accommodating chamber 51, and the other part of the snap-fit members 4 is arranged in the communicating chamber 52, or all of the snap-fit members 4 may be arranged in the accommodating chamber 51, or all of the snap-fit members 4 may be arranged in the communicating chamber 52. In a preferred circumference, the rear-view mirror assembly further includes a connecting member arranged in the accommodating chamber 51, and the laser radar 2 is connected into the accommodating chamber 51 through the connecting member. The connecting member can be selected from a screwing element or a riveting element. Continuing to refer to Fig. 2, preferably, the connecting member between the laser radar 2 and the accommodating chamber 51 is a screwing element, and a through hole is formed on the outside of the laser radar 2 for the screwing element to pass through the laser radar 2 and fasten it. The overall material of the screwing element may be an aluminum alloy, alloy steel and other metal material. Preferably, the connecting member includes a first screwing element 61 and a second screwing element 62, the laser radar 2 is fastened to the inner wall of the accommodating chamber 51 by means of the two screwing elements, and the first screwing element 61 and the second screwing element 62 are respectively located on both sides of the laser radar 2.

In the disclosure, the number of laser radars 2 may be one or more. For example, in the structure that the chamber is divided into the accommodating chamber 51 and the communicating chamber 52, a plurality of laser radars 2 may be arranged in the accommodating chamber 51. The laser radars 2 may be arranged centrally or dispersedly. When the laser radars 2 are dispersedly arranged in the accommodating chamber 51, a bore diameter of the outlet of the air supply pipe 3 can be increased to expand an air supply area, internal temperature of the accommodating chamber 51 is lowered by cooling air of the onboard air-conditioner so that a cooler space is formed to cool down the laser radars 2 in the accommodating chamber 51. In the above, the arrangement of all the laser radars 2 in the accommodating chamber 51 is only exemplary, and those skilled in the art can flexibly adjust the structure of the air supply pipe 3 according to the specific structure and dividing manner of the chamber, as long as all the laser radars 2 can be cooled by outlet air from the air supply pipe 3. The variation of this structure does not depart from the technical concept of the disclosure, and should be limited within the scope of protection of the disclosure.

In the above preferred solution, the air supply pipe 3 may be a flexible pipe, for example, the air supply pipe 3 may be a soft plastic pipe or a rubber pipe, and the flexible pipe with high ductility can be applied to a circumstance that needs to be foldable or non-foldable. Those skilled in the art can also understand that when the rear-view mirror 1 is of a non-foldable structure, the air supply pipe 3 may also be a rigid pipe. Those skilled in the art could flexibly select a material for making the air supply pipe 3 in practical applications. As shown in Fig. 2, the air supply pipe 3 is a flexible pipe. The inlet of the air supply pipe 3 is in communication with the air outlet of the onboard air-conditioner so that cooling air generated by the onboard air-conditioner may enter the air supply pipe 3. The air supply 3 extends into the communicating chamber 52 and the accommodating chamber 51 and the outlet of the air supply pipe 3 is arranged towards the laser radar 2, so that cooling air delivered from the onboard air-conditioner may directly reach the accommodating chamber 51 through the air supply pipe 3 to purposefully cool the laser radar 2.

Heretofore, the technical solutions of the disclosure have been described in conjunction with the preferred embodiments shown in the drawings, however, those skilled in the art can readily understand that the scope of protection of the disclosure is obviously not limited to these specific embodiments.

## Claims

1. A rear-view mirror assembly of a vehicle, which vehicle comprises an onboard air-conditioner, the rear-view mirror assembly comprising a rear-view mirror (1), a laser radar (2), and an air supply pipe (3), wherein the rear-view mirror (1) is provided with a chamber, the laser radar (2) is disposed in the chamber and a detection part of the laser radar (2) is exposed to the outside of the rear-view mirror (1), an inlet of the air supply pipe (3) is in communication with an air outlet of the onboard air-conditioner,
wherein the air supply pipe (3) extends into the chamber, and an outlet of the air supply pipe (3) is arranged towards the laser radar,
wherein the rear-view mirror assembly further comprises a snap-fit assembly disposed in the chamber, the air supply pipe (3) being connected inside the chamber through the snap-fit assembly; and
wherein the snap-fit assembly comprises a plurality of snap-fit members (4), the plurality of snap-fit members (4) being arranged at intervals from one another and clamping the air supply pipe (3) in the chamber.

2. The rear-view mirror assembly according to claim 1, wherein each of the snap-fit members (4) comprises a connecting portion (41), a first gripping portion (42), and a second gripping portion (43), the connecting portion (41) is connected to an inner wall of the rear-view mirror (1), the first gripping portion (42) and the second gripping portion (43) are both connected to the connecting portion (41), and the air supply pipe (3) is clamped between the first gripping portion (42) and the second gripping portion (43).

3. The rear-view mirror assembly according to claim 2, wherein both the first gripping portion (42) and the second gripping portion (43) are elastic gripping portions, one end of the first gripping portion (42) and one end of the second gripping portion (43) are both connected to the connecting portion (41), there is a gap between the other end of the first gripping portion (42) and the other end of the second gripping portion (43), and a width of the gap is less than a diameter of the air supply pipe (3).

4. The rear-view mirror assembly according to claim 1, wherein the chamber comprises an accommodating chamber (51) and a communicating chamber (52), the laser radar (2) is arranged in the accommodating chamber (51), the accommodating chamber (51) is in communication with the interior of a body of the vehicle through the communicating chamber (52), a part of the snap-fit members (4) are arranged in the accommodating chamber (51), and the other part of the snap-fit members are arranged in the communicating chamber (52).

5. The rear-view mirror assembly according to claim 1, further comprising a connecting member, the laser radar (2) being connected to an inner wall of the rear-view mirror (1) through the connecting member.

6. The rear-view mirror assembly according to claim 3, wherein the connecting member comprises a first screwing element (61) and a second screwing element (62), the laser radar (2) is connected to the inner wall of the rear-view mirror (1) through the first screwing element (61) and the second screwing element (62), and the first screwing element (61) and the second screwing element (62) are respectively located on two sides of the laser radar (2).

7. The rear-view mirror assembly according to any one of claims 1 to 4, wherein the number of the laser radar (2) is more than one, and/or
the air supply pipe (3) is a flexible pipe.

8. A vehicle, comprising the rear-view mirror assembly according to any one of claims 1 to 7.

## Patentansprüche

1. Rückspiegelanordnung für ein Fahrzeug, wobei das Fahrzeug eine eingebaute Klimaanlage umfasst, wobei die Rückspiegelanordnung einen Rückspiegel (1), ein Laser-Radar (2) und eine Luftzufuhrleitung (3) umfasst, wobei in dem Rückspiegel (1) eine Kammer bereitgestellt ist, das Laser-Radar (2) in der Kammer angeordnet ist, ein Detektionsteil des Laser-Radars (2) zur äußeren Umgebung des Rückspiegels (1) freiliegt und ein Einlass der Luftzufuhrleitung (3) mit einem Luftauslass der eingebauten Klimaanlage kommuniziert,
wobei sich die Luftzufuhrleitung (3) in die Kammer erstreckt und ein Auslass der Luftzufuhrleitung (3) in Richtung des Laser-Radars orientiert ist,
wobei die Rückspiegelanordnung ferner eine Einrastanordnung umfasst, die in der Kammer angeordnet ist, wobei die Luftzufuhrleitung (3) durch die Einrastanordnung in der Kammer verbunden ist; und
wobei die Einrastanordnung mehrere Einrastelemente (4) umfasst, wobei die mehreren Einrastelemente (4) in Intervallen voneinander angeordnet sind und die Luftzufuhrleitung (3) in der Kammer festklemmen.

2. Rückspiegelanordnung nach Anspruch 1, wobei jedes der Einrastelemente (4) einen Verbindungsabschnitt (41), einen ersten Greifabschnitt (42) und einen zweiten Greifabschnitt (43) umfasst, wobei der Verbindungsabschnitt (41) mit einer Innenwand des Rückspiegels (1) verbunden ist, der erste Greifabschnitt (42) und der zweite Greifabschnitt (43) mit dem Verbindungsabschnitt (41) verbunden sind und die Luftzufuhrleitung (3) zwischen dem ersten Greifabschnitt (42) und dem zweiten Greifabschnitt (43) festgeklemmt ist.

3. Rückspiegelanordnung nach Anspruch 2, wobei der erste Greifabschnitt (42) und der zweite Greifabschnitt (43) elastische Greifabschnitte sind, ein Ende des ersten Greifabschnitts (42) und ein Ende des zweiten Greifabschnitts (43) mit dem Verbindungsabschnitt (41) verbunden sind, zwischen dem anderen Ende des ersten Greifabschnitts (42) und dem anderen Ende des zweiten Greifabschnitts (43) ein Spalt vorhanden ist und eine Breite des Spalts kleiner als ein Durchmesser der Luftzufuhrleitung (3) ist.

4. Rückspiegelanordnung nach Anspruch 1, wobei die Kammer eine Aufnahmekammer (51) und eine Kommunikationskammer (52) umfasst, das Laser-Radar (2) in der Aufnahmekammer (51) angeordnet ist, die Aufnahmekammer (51) durch die Kommunikationskammer (52) mit dem Innenraum einer Karosserie des Fahrzeugs kommuniziert, einige der Einrastelemente (4) in der Aufnahmekammer (51) angeordnet sind und die anderen Einrastelemente in der Kommunikationskammer (52) angeordnet sind.

5. Rückspiegelanordnung nach Anspruch 1, die ferner ein Verbindungselement umfasst, wobei das Laser-Radar (2) durch das Verbindungselement mit einer Innenwand des Rückspiegels (1) verbunden ist.

6. Rückspiegelanordnung nach Anspruch 3, wobei das Verbindungselement ein erstes Schraubelement (61) und ein zweites Schraubelement (62) umfasst, das Laser-Radar (2) durch das erste Schraubelement (61) und das zweite Schraubelement (62) mit der Innenwand des Rückspiegels (1) verbunden ist und das erste Schraubelement (61) und das zweite Schraubelement (62) an einer ersten bzw. zweiten Seite des Laser-Radars (2) positioniert sind.

7. Rückspiegelanordnung nach einem der Ansprüche 1 bis 4, wobei die Zahl der Laser-Radare (2) größer als eins ist, und/oder
die Luftzufuhrleitung (3) eine flexible Leitung ist.

8. Fahrzeug, das die Rückspiegelanordnung nach einem der Ansprüche 1 bis 7 umfasst.

## Revendications

1. Ensemble rétroviseur d'un véhicule, lequel véhicule comporte un climatiseur embarqué, cet ensemble rétroviseur comprenant un rétroviseur (1), un radar laser (2) et un conduit d'alimentation en air (3), le rétroviseur (1) étant pourvu d'une chambre, le radar laser (2) étant disposé dans cette chambre et un élément de détection du radar laser (2) étant exposé à l'extérieur du rétroviseur (1), une entrée du conduit d'alimentation en air (3) étant en communication avec une sortie d'air du climatiseur embarqué,
le conduit d'alimentation en air (3) s'étendant dans la chambre, et une sortie du conduit d'alimentation en air (3) étant disposée vers le radar laser,
l'ensemble rétroviseur comprenant en outre un ensemble encliquetable disposé dans la chambre, le conduit d'alimentation en air (3) étant rattaché à l'intérieur de la chambre au moyen de cet ensemble encliquetable ; et
l'ensemble encliquetable comportant une pluralité d'éléments encliquetables (4), cette pluralité d'éléments encliquetables (4) étant disposés à des intervalles les uns des autres et fixant par serrage le conduit d'alimentation en air (3) dans la chambre.

2. Ensemble rétroviseur selon la revendication 1, dans lequel chacun des éléments encliquetables (4) comporte une partie de liaison (41), une première partie de saisie (42), et une deuxième partie de saisie (43), la partie de liaison (41) étant rattachée à une paroi interne du rétroviseur (1), la première partie de saisie (42) et la deuxième partie de saisie (43) étant toutes les deux rattachées à la partie de liaison (41), et le conduit d'alimentation en air (3) étant fixé par serrage entre la première partie de saisie (42) et la deuxième partie de saisie (43).

3. Ensemble rétroviseur selon la revendication 2, dans lequel la première partie de saisie (42) et la deuxième partie de saisie (43) sont toutes les deux des parties de saisie élastiques, une extrémité de la première partie de saisie (42) et une extrémité de la deuxième partie de saisie (43) étant toutes les deux rattachées à la partie de liaison (41), un intervalle existant entre l'autre extrémité de la première partie de saisie (42) et l'autre extrémité de la deuxième partie de saisie (43), et une largeur de cet intervalle étant plus petite qu'un diamètre du conduit d'alimentation en air (3).

4. Ensemble rétroviseur selon la revendication 1, dans lequel la chambre comprend une chambre de logement (51) et une chambre de communication (52), le radar laser (2) est disposé dans la chambre de logement (51), la chambre de logement (51) est en communication avec l'intérieur d'un corps du véhicule au moyen de la chambre de communication (52), une partie des éléments encliquetables (4) sont disposés dans la chambre de logement (51), et l'autre partie des éléments encliquetables sont disposés dans la chambre de communication (52).

5. Ensemble rétroviseur selon la revendication 1, comportant en outre un élément de liaison, le radar laser (2) étant rattaché à une paroi interne du rétroviseur (1) au moyen de cet élément de liaison.

6. Ensemble rétroviseur selon la revendication 3, dans lequel l'élément de liaison comprend un premier élément de vissage (61) et un deuxième élément de vissage (62), le radar laser (2) est rattaché à la paroi interne du rétroviseur (1) au moyen du premier élément de vissage (61) et du deuxième élément de vissage (62), et le premier élément de vissage (61) et le deuxième élément de vissage (62) sont situés respectivement sur deux côtés du radar laser (2).

7. Ensemble rétroviseur selon l'une quelconque des revendications 1 à 4, dans lequel le nombre du radar laser (2) est plus grand que un, et/ou dans lequel le conduit d'alimentation en air (3) est un conduit flexible.

8. Véhicule, comportant l'ensemble rétroviseur selon l'une quelconque des revendications 1 à 7.
